# FASCICULE DE BREVET EUROPEEN

(11) **EP 2 768 721 B1**
(45) Date de publication et mention de la délivrance du brevet: **19.07.2017**
(21) Numéro de dépôt: 12759100.6
(22) Date de dépôt: 11.09.2012
(51) Int. Cl.: B62D 25/08, B62D 29/04, B29C 45/14, B29C 70/48

(54) **PIÈCE DE STRUCTURE, NOTAMMENT LONGERON DE FACE AVANT DE VÉHICULE, ET PROCÉDÉ DE FABRICATION D'UNE TELLE PIÈCE**
STRUKTURBAUTEIL, INSBESONDERE FAHRZEUGVORDERBAU-LÄNGSTRÄGER UND VERFAHREN ZUR HERSTELLUNG EINES SOLCHEN BAUTEILS
STRUCTURAL COMPONENT, NOTABLY VEHICLE FRONT END SIDE-MEMBER, AND METHOD OF MANUFACTURING SUCH A COMPONENT

(30) Priorité: 13.09.2011 FR 1158156
(43) Date de publication de la demande: 27.08.2014
(73) Titulaire: Valeo Systèmes Thermiques, 78320 Le Mesnil-Saint-Denis (FR)
(72) Inventeur: LANARD, Jean-Louis, F-78810 Feucherolles (FR); GUYOMARD, Jean-Nicolas, F-27930 Le Mesnil Fuguet (FR)
(74) Mandataire: Metz, Gaëlle
(86) Numéro de dépôt international: PCT/EP2012/067737
(87) Numéro de publication internationale: WO 2013/037774

(56) Documents cités:
- EP-A1- 1 754 650
- EP-A2- 1 340 668
- WO-A1-2007/093006
- DE-A1-102004 038 893
- DE-A1-102007 041 431
- US-A1- 2009 148 700

## Description

La présente invention concerne une pièce de structure, notamment longeron de face avant de véhicule, et une face avant de véhicule, notamment automobile, comprenant une telle pièce. Elle concerne également un procédé de fabrication de ladite pièce de structure.

Une face avant de véhicule automobile est un élément structurel susceptible d'intégrer divers équipements du véhicule, tels que projecteurs, clignotants, avertisseur sonore, échangeur thermique ou module de refroidissement complet, etc. Formé en module, elle est destinée à être montée, pré équipée desdits éléments, sur le châssis du véhicule. Un tel mode de montage permet d'optimiser le processus de fabrication du véhicule en opérant en parallèle, d'une part, le montage du module de face avant et, d'autre part, le montage d'éléments, notamment le moteur, directement sur le châssis, le module de face avant étant ensuite rapporté d'un bloc sur le châssis.

Il est ainsi connu des faces avant ou modules de faces avant comprenant une armature de support permettant la fixation des éléments d'équipement de la face avant. Outre leur fonction de support, lesdites armatures doivent de plus répondre à différentes contraintes d'absorption de chocs. Elles comprennent ainsi des pièces de structure telle que des longerons qui doivent présenter une rigidité suffisante.

Les longerons employés aujourd'hui ont une structure en métal ou une structure hybride, combinant métal et matériau plastique. Dans les longerons en structure hybrides, le métal sert à donner sa forme à la pièce. Il est surmoulé du matériau plastique qui définit des nervures de renforcement et/ou des brides de fixation. Même si les longerons en structure hybride présentent un poids inférieur à ceux en métal, ils restent relativement lourds.

Il est par ailleurs connu de former des pièces présentant une rigidité satisfaisante en employant des plaques de résine chargées de fibres. Lesdites plaques sont préalablement mises en forme par thermo formage puis surmoulées par un matériau plastique. En utilisant un tel matériau à la place du métal et en formant des nervures et/ou brides de fixation avec le matériau plastique, on pourrait obtenir des longerons présentant un poids inférieur aux longerons à structure hybride actuels. Le document US 2009148700 décrit une telle pièce de structure.

Bien qu'intéressante de ce point de vue, une telle solution présente cependant l'inconvénient de nécessiter un premier moule pour la mise en forme des plaques de résine et un moule supplémentaire pour le surmoulage de la matière plastique. Elle présente ainsi un coût élevé, à la fois en termes d'investissement et de mise en oeuvre. Cette solution nécessite de plus une opération de détourage de la matière, soit après mise en forme de la résine, soit après démoulage de la pièce. Un tel détourage augmente encore les coûts d'investissement et de mise en oeuvre. Il est aussi la source de chutes de matière qui grève le coût de revient de la pièce.

L'invention vise à améliorer la situation et propose à cette fin une pièce de structure, notamment longeron de face avant de véhicule, comprenant une âme en un premier matériau incorporant des fibres de renfort, ladite âme étant surmoulée d'un second matériau conférant sa rigidité à la pièce. L'âme est constituée d'une nappe de matériau textile incorporant les fibres de renforts. L'invention vient de l'analyse faite par le déposant selon laquelle l'intérêt des résines évoquées plus haut est la présence des fibres. En effet, ce sont elles qui confèrent la rigidité attendue pour des pièces de structure comme les longerons de face avant de véhicule. S'il est nécessaire d'employer un second matériau pour définir la pièce alors on peut conférer à ce second matériau le rôle de maintient en forme des fibres rempli, dans l'état de l'art, par la résine. On pourra ainsi simplifier le procédé de fabrication tout en obtenant des pièces présentant une rigidité satisfaisante et présentant un poids particulièrement faible.

Selon différents aspects de l'invention, qui pourront être pris ensemble ou séparément :
- le premier matériau est un matériau souple,
- les fibres de renfort sont disposées selon plusieurs directions,
- la pièce présente un profil général au niveau de l'âme et le second matériau définit des nervures et/ou des zones d'interface au niveau dudit profil général,
- ledit profil général est en U,
- le second matériau est prévu sur l'ensemble de la surface de l'âme de sorte que l'âme n'est plus visible extérieurement.

L'invention concerne également une face avant de véhicule de véhicule, notamment automobile, comprenant une pièce de structure telle que définie plus haut.

L'invention concerne encore un procédé de fabrication d'une pièce de structure, notamment longeron de face avant de véhicule, comprenant une âme en un premier matériau, incorporant des fibres de renfort, ladite âme étant surmoulée d'un second matériau, procédé dans lequel on dispose le premier matériau dans une cavité de moulage, ladite cavité de moulage donnant sa forme audit premier matériau au moins dans une première partie de ladite cavité de moulage. Le premier matériau est une nappe de matériau textile incorporant lesdites fibres de renfort, on découpe la nappe selon un contour de la pièce et on dispose ledit matériau textile dans la cavité de moulage. On dispose ainsi d'une solution permettant d'utiliser un seul outil de moulage plutôt que les deux outils nécessaires pour la fabrication de pièces employant des plaques de résines. On évitera de plus les opérations de détourage associées.

Selon différents aspects de l'invention qui pourront être pris ensemble ou séparément :
- on réalise une étape d'injection du second matériau dans la cavité de moulage de façon à surmouler l'âme avec ledit second matériau,
- on effectue l'étape d'injection en introduisant le second matériau dans la cavité de moulage en maintenant ladite cavité de moulage partiellement ouverte puis on ferme ladite cavité de moulage et on soumet ladite cavité de moulage à une augmentation de pression,
- ladite première partie de la cavité de moulage définit une zone donnant son profil général à la pièce et ladite cavité de moulage comprend une autre zone pour le moulage de nervures et/ou zones d'interface.

Ledit procédé permet d'obtenir une pièce de structure telle décrite plus haut.

L'invention sera mieux comprise à la lecture de la description suivante accompagnée des dessins en annexe parmi lesquels :
- la figure 1 illustre de façon schématique et partielle, en perspective, un exemple de pièce de structure selon l'invention,
- la figure 2 illustre de façon schématique, en perspective, une nappe de matériau employée dans la pièce de la figure 1,
- la figure 3a et 3b illustrent de façon schématique, en coupe transversale, un moule servant à l'obtention de la pièce de la figure 1, dans deux étapes successives de son procédé de fabrication,
- les figures 4a et 4b illustrent de façon schématique deux phases successives de l'une des étapes dudit procédé de fabrication.

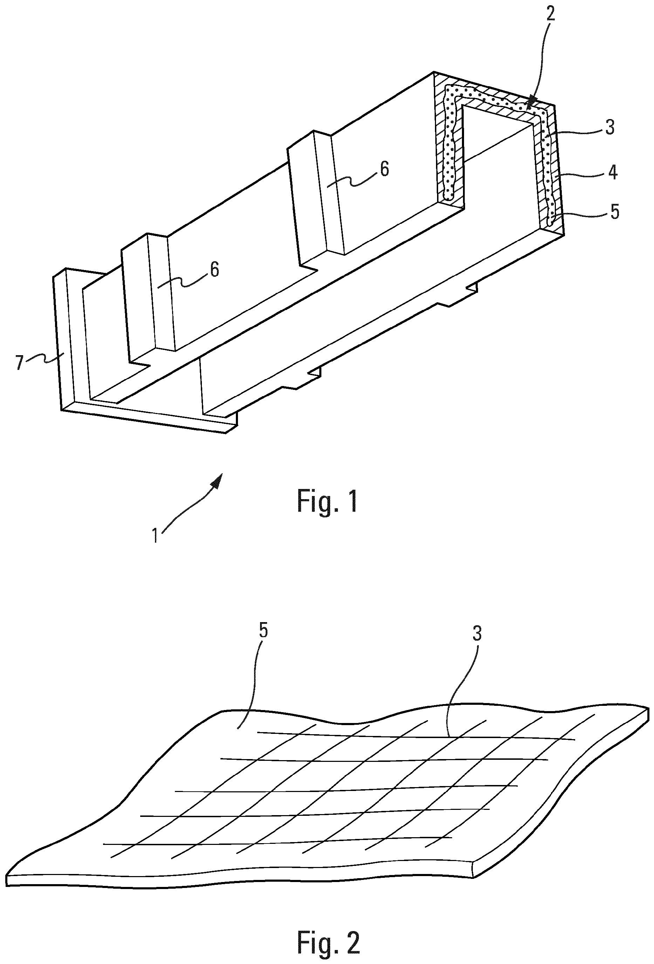

Comme illustré à la figure 1, l'invention concerne une pièce de structure 1. Il pourra s'agir, notamment, d'un longeron de face avant de véhicule, comme développé plus loin.

Ladite pièce comprend une âme 2 en un premier matériau incorporant des fibres de renfort 3. Ladite âme 2 est de plus surmoulée d'un second matériau 4 conférant sa rigidité à la pièce. On entend par là que, si la pièce 1 n'était constituée que de son âme 2, elle ne conserverait pas sa forme. C'est au contraire le second matériau 4 qui donne son maintien à la pièce.

On évite ainsi l'emploi d'une pièce préformée pour constituer l'âme 2. On peut en outre utiliser pour l'âme des matériaux légers permettant de diminuer le poids de la pièce 1 par rapport aux pièces hybrides métal plastique de l'état de l'art.

Lesdites fibres 3 sont, par exemple, des fibres de verre ou des fibres de carbone, c'est-à-dire, des fibres suffisamment souples pour être mise en forme et présentant une résistance mécanique contribuant à renforcer la pièce.

Le second matériau est, par exemple, un matériau plastique. Il pourra s'agir, notamment, d'un polyamide tel que le matériau connu de l'homme du métier sous le nom de PA 6-6.

Comme illustré à la figure 2, selon un premier mode de réalisation, ledit premier matériau de l'âme 2 est, par exemple, un matériau souple. Il s'agit, notamment, d'une nappe 5 de matériau textile incorporant les fibres de renforts 3.

Selon une variante, non illustrée, l'âme est constituée d'un matériau liant incorporant lesdites fibres de renforts. Il s'agira, par exemple, d'un matériau polymérisable.

De manière avantageuse, les fibres sont disposées selon plusieurs directions. Il s'agira en particulier des directions selon lesquelles la pièce 1 est destinée à être sollicitée mécaniquement telle que, dans le cas de pièces allongées, de leur direction d'extension.

Si l'on se reporte de nouveau à la figure 1, on constate que la pièce 1 présente un profil général au niveau de l'âme 2, ici en U, et le second matériau 4 définit des nervures 6 et/ou des zones d'interface 7 au niveau dudit profil général. Les nervures 6 sont ici situées dans des plans perpendiculaires à l'axe de la pièce. Elles pourraient bien sûr présenter toute autre configuration, notamment des configurations où elles s'entrecroisent telles que des configurations en nid d'abeille. Les zones d'interface 7 comprennent, par exemple, des platines de fixation et/ou brides destinées, dans le cas de longerons de face avant de véhicule, à permettre une fixation du longeron au châssis du véhicule ou à d'autres pièces de la face avant.

Le second matériau 4 est prévu, par exemple, sur l'ensemble de la surface de l'âme 2 de sorte que ladite âme 2 n'est plus visible extérieurement. On assure de la sorte une rigidité optimale de la pièce 1.

Comme déjà évoqué, l'invention concerne également une face avant de véhicule, notamment automobile, comprenant une traverse supérieure formée d'une pièce de structure telle que décrite plus haut, notamment sous la forme d'une pièce de forme allongée.

Ladite face avant comprend, par exemple, une armature de support comprenant une traverse supérieure, destinée à définir une pièce horizontale, s'étendant sensiblement d'une aile à l'autre du véhicule équipé. Une telle armature pourra également comprendre un ou des jambages, rapportés au niveau des extrémités de ladite traverse supérieure. Lesdits jambages sont destinés à s'étendre verticalement. Ils pourront être reliés par une pièce horizontale basse. Ladite traverse supérieure, lesdits jambages et/ou ladite pièce horizontale basse pourront être constitués d'une pièce de structure 1 telle que définie plus haut.

La face avant supporte, par exemple, différents éléments d'équipement, tels qu'une serrure de capot, des échangeurs de chaleurs, des projecteurs ou blocs optiques, des réservoirs de différents fluides, un bouclier avant et/ou autres. Tout ou partie desdits équipements sont fixés, notamment, à l'armature de support.

L'invention concerne aussi d'ailleurs une telle armature de support, qui pourra être monobloc ou assemblée à partir de plusieurs pièces. Elle concerne encore un module de face avant, pré-monté et configuré pour un être monté en une seule opération sur le châssis du véhicule.

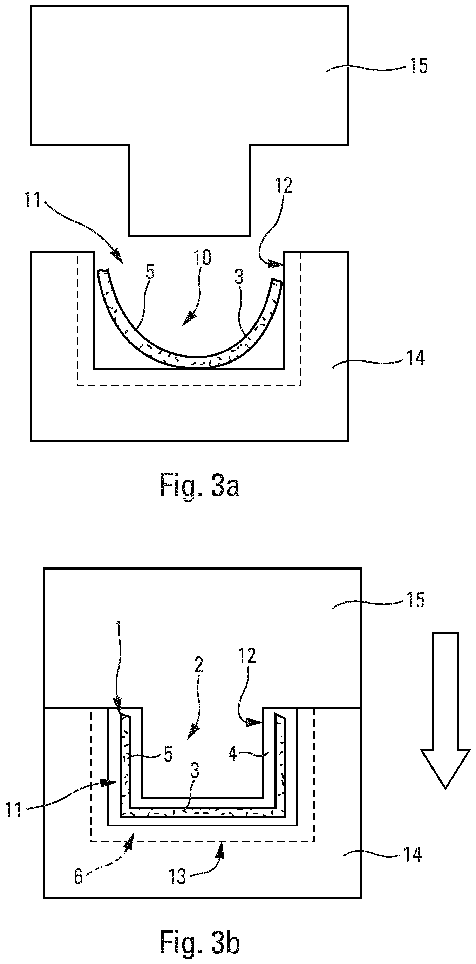

Telle qu'illustrés aux figures 3a et 3b, l'invention concerne en outre un procédé de fabrication d'une pièce de structure, notamment longeron de face avant de véhicule, telle que décrite plus haut.

Comme plus particulièrement illustré à la figure 3a, on dispose un premier matériau 10 dans une cavité de moulage 11, ladite cavité de moulage donnant sa forme audit premier matériau au moins dans une première partie 12 de ladite cavité de moulage 11.

On entend par là que le premier matériau 10 n'est pas déjà formé quand on l'installe dans la cavité de moulage 11. On évite ainsi les opérations de mise en forme préalable de l'âme de la pièce et on dispose d'une solution selon laquelle on réduit les outillages de fabrication par rapport à des solutions exploitant des âmes en résine formées à chaud.

Dans le cas, correspondant à celui illustré, d'un premier matériau 10 formé d'une nappe de matériau textile 5 incorporant les fibres de renfort 3, on découpe préalablement la nappe 5 selon un contour de la pièce et on dispose ledit matériau textile dans la cavité de moulage 11. Par la souplesse du textile, le premier matériau et donc les fibres qu'il incorpore épouse au moins en partie la forme de la cavité de moulage 11. La nappe de matériau textile 5 pourra être maintenue en place, pour la suite des opérations, par exemple, par des aiguilles, non représentées.

Selon une variante non illustrée dans laquelle ledit premier matériau est un liant, on dispose préalablement lesdites fibres de renfort dans la cavité de moulage et on introduit le liant dans la cavité de moulage. Les fibres épousent ainsi la forme de la cavité de moulage. Elles sont maintenues entre elles pour la suite des opérations par le matériau liant.

Selon cette variante, les fibres pourront être projetées dans la cavité de moulage, notamment à l'aide d'un pistolet. Le matériau liant est alors projeté sur les fibres.

Dans ces différentes variantes, pour la suite des opérations, on réalise une étape d'injection du second matériau 4 dans la cavité de moulage 11 de façon à surmouler l'âme 2 avec ledit second matériau 4, destiné à donner sa rigidité à la pièce 1.

Selon un mode de réalisation avantageux, ladite première partie 12 de la cavité de moulage définit une zone donnant son profil général à la pièce, ici en U. Et ladite cavité de moulage 11 comprend une autre zone 13 pour le moulage de nervures 6 et/ou zones d'interface.

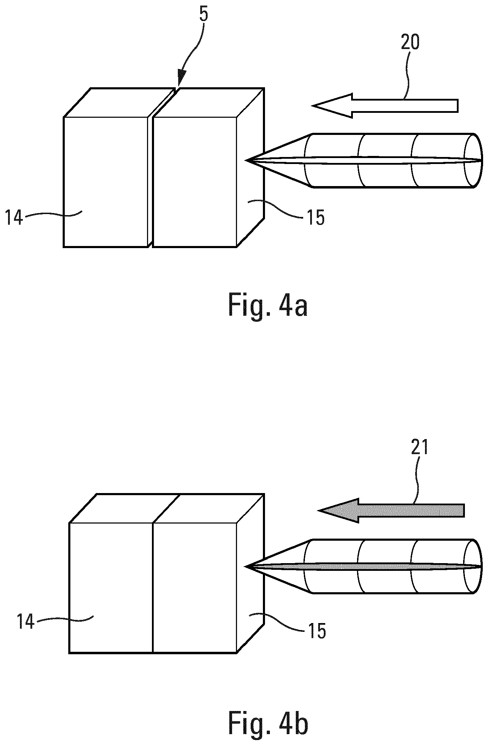

Comme illustré aux figures 4a et 4b, on effectue l'étape d'injection, par exemple, en introduisant tout d'abord la seconde matière dans la cavité de moulage 5, selon la flèche repérée 20, en maintenant ladite cavité de moulage partiellement ouverte. Dans un second temps, on ferme ladite cavité de moulage 5 et on soumet ladite cavité de moulage à une augmentation de pression. On pourra pour cela effectuer une injection d'air dans la cavité de moulage, selon la flèche repérée 21, notamment sous haute pression.

A titre d'exemple, on pourra employer un moule comprenant une matrice 14 et un poinçon 15 définissant entre eux un entrefer correspondant à ladite cavité de moulage 5. Au niveau de la première partie 12 de cette dernière, l'entrefer est supérieur à l'épaisseur de l'âme 2 de la pièce 1 de façon à ce que le second matériau 4 soit prévu sur l'ensemble de la surface de ladite âme 2.

Ainsi, selon une premier mode de réalisation, on découpe une nappe textile chargées de fibres de renfort à dimension, on met en place la nappe dans une cavité de moulage, on injecte le second matériau dans la cavité de moulage puis on démoule la pièce.

Selon un autre mode de réalisation, on projette les fibres de renfort dans la cavité de moulage, on projette un liant sur lesdites fibres, on injecte le second matériau dans la cavité de moulage puis on démoule la pièce.

Cela étant, de tels modes de réalisation ne sont bien sûr pas limitatifs.

## Revendications

1. Pièce (1) de structure, notamment longeron de face avant de véhicule, comprenant une âme (2) en un premier matériau incorporant des fibres de renfort (3), ladite âme (2) étant surmoulée d'un second matériau (4) conférant sa rigidité à la pièce,
**caractérisé en ce que** l'âme (2) est constituée d'une nappe (5) de matériau textile incorporant les fibres de renforts (3).

2. Pièce selon la revendication 1 dans laquelle le premier matériau est un matériau souple.

3. Pièce selon l'une quelconque des revendications précédentes dans laquelle les fibres de renfort (3) sont disposées selon plusieurs directions.

4. Pièce selon l'une quelconque des revendications précédentes dans laquelle la pièce (1) présente un profil général au niveau de l'âme (2) et le second matériau (4) définit des nervures (6) et/ou des zones d'interface (7) au niveau dudit profil général.

5. Pièce selon la revendication 4 dans lequel ledit profil général est en U.

6. Pièce selon l'une quelconque des revendications précédentes dans lequel le second matériau (4) est prévu sur l'ensemble de la surface de l'âme (2) de sorte que ladite âme (2) n'est plus visible extérieurement.

7. Face avant de véhicule de véhicule, notamment automobile, comprenant une pièce (1) de structure selon l'une quelconque des revendications précédentes.

8. Procédé de fabrication d'une pièce (1) de structure, notamment longeron de face avant de véhicule, comprenant une âme (2) en un premier matériau incorporant des fibres de renfort (3), ladite âme (2) étant surmoulée d'un second matériau (4), procédé dans lequel on dispose le premier matériau dans une cavité de moulage (11), ladite cavité de moulage (11) donnant sa forme audit premier matériau au moins dans une première partie (12) de ladite cavité de moulage (11), et dans lequel le premier matériau étant une nappe (5) de matériau textile incorporant lesdites fibres de renfort (3), on découpe la nappe (5) selon un contour de la pièce et on dispose ledit matériau textile (11) dans la cavité de moulage (11).

9. Procédé selon la revendication 8 dans lequel on réalise une étape d'injection du second matériau (4) dans la cavité de moulage (11) de façon à surmouler l'âme (2) avec ledit second matériau (4).

10. Procédé selon la revendication 9 dans lequel on effectue l'étape d'injection en introduisant le second matériau (4) dans la cavité de moulage (11) en maintenant ladite cavité de moulage (11) partiellement ouverte puis on ferme ladite cavité de moulage (11) et on soumet ladite cavité de moulage (11) à une augmentation de pression.

11. Procédé selon l'une quelconque des revendications précédentes dans lequel ladite première partie (12) de la cavité de moulage (11) définit une zone donnant son profil général à la pièce et dans lequel ladite cavité de moulage (11) comprend une autre zone (13) pour le moulage de nervures (6) et/ou zones d'interface (7).

## Patentansprüche

1. Strukturbauteil (1), insbesondere Fahrzeugvorderbau-Längsträger, umfassend einen Kern (2) aus einem ersten Material, das Verstärkungsfasern (3) enthält, wobei der Kern (2) von einem zweiten Material (4) überformt ist, das dem Bauteil seine Festigkeit verleiht,
**dadurch gekennzeichnet, dass** der Kern (2) aus einer Bahn (5) aus Textilmaterial gebildet ist, das die Verstärkungsfasern (3) enthält.

2. Bauteil nach Anspruch 1, wobei das erste Material ein flexibles Material ist.

3. Bauteil nach einem der vorhergehenden Ansprüche, wobei die Verstärkungsfasern (3) in mehreren Richtungen angeordnet sind.

4. Bauteil nach einem der vorhergehenden Ansprüche, wobei das Bauteil (1) ein allgemeines Profil auf Ebene des Kerns (2) aufweist und das zweite Material (4) Rippen (6) und/oder Schnittstellenbereiche (7) auf Ebene des allgemeinen Profils definiert.

5. Bauteil nach Anspruch 4, wobei das allgemeine Profil U-förmig ist.

6. Bauteil nach einem der vorhergehenden Ansprüche, wobei das zweite Material (4) auf der Gesamtheit der Oberfläche des Kerns (2) derart vorgesehen ist, dass der Kern (2) von außen nicht mehr sichtbar ist.

7. Fahrzeugfahrzeugvorderbau eines Fahrzeugs, insbesondere eines Kraftfahrzeugs, umfassend ein Strukturbauteil (1) nach einem der vorhergehenden Ansprüche.

8. Verfahren zur Herstellung eines Strukturbauteils (1), insbesondere eines Fahrzeugvorderbau-Längsträgers, umfassend einen Kern (2) aus einem ersten Material, das Verstärkungsfasern (3) enthält, wobei der Kern (2) von einem zweiten Material (4) überformt wird, wobei bei dem Verfahren das erste Material in einem Formhohlraum (11) angeordnet wird, wobei der Formhohlraum (11) dem ersten Material mindestens in einem ersten Teil (12) des Formhohlraums (11) seine Form gibt, und wobei das erste Material eine Bahn (5) aus Textilmaterial ist, das die Verstärkungsfasern (3) enthält, wobei die Bahn (5) nach einer Kontur des Bauteils zugeschnitten wird und wobei das Textilmaterial (11) in dem Formhohlraum (11) angeordnet wird.

9. Verfahren nach Anspruch 8, wobei ein Schritt des Einspritzens des zweiten Materials (4) in den Formhohlraum (11) derart durchgeführt wird, um den Kern (2) mit dem zweiten Material (4) zu überformen.

10. Verfahren nach Anspruch 9, wobei der Schritt des Einspritzens durchgeführt wird, indem das zweite Material (4) in den Formhohlraum (11) eingeführt wird, indem der Formhohlraum (11) teilweise offen gehalten wird, und dann der Formhohlraum (11) geschlossen wird und der Formhohlraum (11) einer Druckerhöhung unterworfen wird.

11. Verfahren nach einem der vorhergehenden Ansprüche, wobei der erste Teil (12) des Formhohlraums (11) einen Bereich definiert, der dem Bauteil sein allgemeines Profil gibt, und wobei der Formhohlraum (11) einen anderen Bereich (13) für das Formen der Rippen (6) und/oder Schnittstellenbereiche (7) aufweist.

## Claims

1. Structural component (1), notably a vehicle front end side-member, comprising a core (2) made of a first material incorporating reinforcement fibres (3), the said core (2) being over-moulded with a second material (4) which provides the component with its rigidity, **characterized in that** the core (2) is constituted by a sheet (5) of textile material incorporating the reinforcement fibres (3).

2. Component according to Claim 1, wherein the first material is a flexible material.

3. Component according to either of the preceding claims, wherein the reinforcement fibres (3) are arranged according to a plurality of directions.

4. Component according to any one of the preceding claims, wherein the component (1) has a general profile at the core (2), and the second material (4) defines ribs (6) and/or interface areas (7) at the said general profile.

5. Component according to Claim 4, wherein the said general profile is in the form of a "U".

6. Component according to any one of the preceding claims, wherein the second material (4) is provided on all of the surface of the core (2), such that the said core (2) is no longer visible from the exterior.

7. Front end of a vehicle of a vehicle, in particular a motor vehicle, comprising a structural component (1) according to any one of the preceding claims.

8. Method for production of a structural component (1), notably a vehicle front end side-member, comprising a core (2) made of a first material incorporating reinforcement fibres (3), the said core (2) being over-moulded with a second material (4), in which method the first material is arranged in a moulding cavity (11), the said moulding cavity (11) providing the said first material with its form at least in a first part (12) of the said moulding cavity (11), and wherein, with the first material being a sheet (5) of textile material incorporating the said reinforcement fibres (3), the sheet (5) is cut according to a contour of the component, and the said textile material (11) is arranged in the moulding cavity (11).

9. Method according to Claim 8, wherein a step is carried out of injection of the second material (4) into the moulding cavity (11), such as to over-mould the core (2) with the said second material (4).

10. Method according to Claim 9, wherein the injection step is carried out by introducing the second material (4) into the moulding cavity (11) whilst keeping the said moulding cavity (11) partially open, then the said moulding cavity (11) is closed, and the said moulding cavity (11) is subjected to a pressure increase.

11. Method according to any one of the preceding claims, wherein the said first component (12) of the moulding cavity (11) defines an area which provides the component with its general profile, and wherein the said moulding cavity (11) comprises another area (13) for moulding of ribs (6) and/or interface areas (7).
